(19) Europäisches Patentamt
European Patent Office
Office européen des brevets

(11) **EP 3 306 324 B1**

(12) **FASCICULE DE BREVET EUROPEEN**

(45) Date de publication et mention de la délivrance du brevet:
**22.04.2020 Bulletin 2020/17**

(51) Int Cl.:
***G01P 5/02*** *(2006.01)* ***G01P 13/02*** *(2006.01)*

(21) Numéro de dépôt: **17194972.0**

(22) Date de dépôt: **05.10.2017**

(54) **DISPOSITIF DE MESURE DE PARAMETRES DE VOL A CAPTEURS OPTIQUES DE DEFORMATION PORTES PAR LE RADÔME D'UN AERONEF**

VORRICHTUNG ZUM MESSEN VON FLUGPARAMETERN MIT OPTISCHEN DEFORMATIONSSENSOREN, DIE AUF DER RADARKUPPEL EINES LUFTFAHRZEUGS ANGEBRACHT SIND

DEVICE FOR MEASURING FLIGHT PARAMETERS WITH OPTICAL DEFORMATION SENSORS CARRIED BY THE RADOME OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2016 FR 1659732**

(43) Date de publication de la demande:
**11.04.2018 Bulletin 2018/15**

(73) Titulaires:
• **Airbus Operations S.A.S.**
  **31060 Toulouse (FR)**
• **Airbus (S.A.S.)**
  **31700 Blagnac (FR)**

(72) Inventeurs:
• **Bernus Christophe**
  **31000 Toulouse (FR)**
• **Esteve, Nathalie**
  **31490 Leguevin (FR)**
• **Redon, Jean**
  **31500 Toulouse (FR)**
• **Poret, Cécile**
  **31880 La Salvetat Saint Gilles (FR)**
• **Boisson, Thomas**
  **31870 Lagardelle Sur Leze (FR)**
• **Bulancea, Andrei**
  **31770 Colomiers (FR)**
• **Fontaine, Alain**
  **31100 Toulouse (FR)**

(74) Mandataire: **Gicquel, Olivier Yves Gérard**
  **Airbus Opérations (S.A.S)**
  **XIF - M0101/1**
  **316, route de Bayonne**
  **31060 Toulouse Cedex (FR)**

(56) Documents cités:
**CN-A- 103 913 592       DE-A1-102013 008 617**
**GB-A- 2 440 954          US-A- 6 107 976**
**US-A1- 2012 279 313    US-A1- 2014 229 139**
**US-A1- 2015 329 216**

## Description

La présente invention concerne un dispositif de mesure de paramètres de vol d'un aéronef et plus précisément de la vitesse, de l'angle de dérapage et de l'angle d'incidence de l'aéronef comprenant au moins un capteur optique placé au niveau du radôme. Elle concerne également l'aéronef intégrant un tel dispositif de mesure.

## DOMAINE TECHNIQUE

La mesure des paramètres de vol tels que la vitesse est communément réalisée notamment à l'aide de tube de Pitot. Le tube de Pitot est un dispositif se présentant sous la forme d'un tube dans lequel un flux d'air est immergé et entraine une augmentation de pression mesurée par un manomètre différentiel. Le manomètre reçoit également la mesure de la pression environnante à partir d'un autre port monté sur le fuselage et en déduit la vitesse de l'aéronef par calcul.

## TECHNIQUE ANTERIEURE

Le document US 6038932 divulgue un aéronef pourvu d'un tel dispositif de mesure de pression pour l'obtention de la vitesse et de l'altitude de l'aéronef. Ce document met en avant des inconvénients du tube Pitot comme par exemple un fonctionnement imparfait du tube Pitot en cas d'angles d'attaque trop importants. L'idée à la base du document en question est de pallier à ces inconvénients et notamment aux angles d'attaque extrêmes en plaçant les sondes Pitot au niveau du radôme, à savoir directement dans l'écoulement de l'air.

Le document US2015329216 divulgue un dispositif de détermination de la vitesse de l'avion à partir de capteurs placés sur le radome permettant de mesurer la déformée et d'en déduire la vitesse à partir de celle-ci. Cependant, les câbles électriques qui se trouvent placés entre le radar et les capteurs peuvent avoir un impact sur les performances radioélectriques du radar.

Le document US2014/0229139 révèle un dispositif de détermination de la vitesse de l'avion à partir de la déformation mesurée par des capteurs placés sur l'empennage ou l'aile mais pas le radome qui présente une configuration très particulière.

Le document CN103913592 décrit un dispositif pour mesurer la vitesse et la direction du vent à partir de détecteur de fibres optiques et n'a pour application que la surveillance d'un environnement météorologique.

La présente invention a pour but de proposer un dispositif permettant d'offrir une alternative à l'utilisation de sonde Pitot présentant l'inconvénient d'un fonctionnement imparfait en cas d'angles d'attaque trop importants comme le révèle l'art antérieur cité ou encore en cas de gel ou autres.

## EXPOSE DE l'INVENTION

Pour ce faire, la présente invention propose un dispositif de mesure d'au moins un paramètre de vol tel que la vitesse, l'angle de dérapage ou l'angle d'incidence ou tout autre paramètre en dépendant d'un aéronef comprenant un radôme, comprenant des systèmes permettant de mesurer la déformée de la paroi due aux efforts exercés par l'air sur le radôme et un calculateur permettant de calculer à partir des mesures de déformée obtenues par les dits systèmes le ou lesdits paramètres de vol souhaités, caractérisé en ce que les systèmes comprennent au moins une fibre optique portée par le radôme pourvue de réseaux de Bragg, chaque fibre comportant plusieurs réseaux de Bragg distribués sur la longueur de la fibre de manière à les répartir sur le radôme une fois la fibre installée.

De ce fait, le système étant dépourvu de sondes Pitot, il évite tous les inconvénients découlant de leur utilisation.

Le dispositif de mesure présente au moins l'une des caractéristiques optionnelles suivantes, prises isolément ou en combinaison.

Le dispositif de mesure comprend au moins une fibre supplémentaire destinée à la mesure de la température.

La fibre ou une partie de celle-ci est disposée sur la face interne de la paroi du radôme.

La fibre est intégrée à l'intérieur de la paroi du radôme.

Un bloc de mousse est prévu au niveau d'au moins un réseau de Bragg destiné à la mesure de la déformée, entre des peaux de la paroi du radôme de manière à les joindre.

Le dispositif de mesure comprend un système d'isolation des contraintes mécaniques d'au moins un réseau de Bragg..

Le système d'isolation consiste en une enveloppe glissante prévue autour du ou des dits réseaux de Bragg.

L'enveloppe glissante est insérée entre la peau et le bloc de mousse.

L'enveloppe glissante est fixée sur la surface extérieure de la paroi au niveau du bloc de mousse.

L'enveloppe est positionnée au plus proche du réseau de Bragg associé au bloc de mousse.

Le système d'isolation consiste en un échantillon de peau superposé à la paroi du radôme sur lequel le réseau de Bragg est disposé pour le découpler de la déformée mécanique.

La présente invention se rapporte également à un procédé de mesure d'au moins un paramètre de vol tel que la vitesse, l'angle de dérapage ou l'angle d'incidence ou tout autre paramètre en dépendant d'un aéronef comprenant un radôme, comprenant :

- une étape de mesure de déformée de la paroi provenant des efforts de l'air sur le radôme à l'aide d'au moins des systèmes portés par le radôme permettant de mesurer la déformée de la paroi ;
- une étape de calcul au moyen d'un calculateur permettant de calculer à partir des mesures de déformée obtenues par lesdits systèmes le ou lesdits paramètres de vol souhaités caractérisé en ce que les systèmes comprenant au moins une fibre optique portée par le radôme pourvue de réseaux de Bragg, chaque fibre comportant plusieurs réseaux de Bragg distribués sur la longueur de la fibre de manière à les répartir sur le radôme une fois la fibre installée, le procédé comprend :
- une étape de mesure de la température au niveau des réseaux de Bragg et une étape de compensation de la mesure de déformée à l'aide de la température mesurée ;
- une étape de mesure de la différence de température intérieure et extérieure au radôme et une étape de compensation de la mesure de la déformée à l'aide de la différence de température mesurée.

Le procédé de mesure présente au moins l'une des caractéristiques optionnelles suivantes, prises isolément ou en combinaison.

Il comprend une étape de mesure de la déformée au niveau d'un échantillon portant un réseau de Bragg et une étape de compensation de la mesure de déformée à l'aide de la mesure de déformée au niveau de l'échantillon.

Il comprend une étape de mesure de la différence de pression entre pression interne du radôme et pression statique et une étape de compensation de la mesure de la déformée à l'aide de la différence de pression mesurée.

La présente invention concerne également un radôme d'aéronef portant au moins une fibre optique pourvue de systèmes permettant de mesurer la déformée de la paroi du radôme provenant des efforts appliqués par l'air sur le radôme.

## DESCRIPTION SOMMAIRE DES DESSINS

D'autres buts, avantages et caractéristiques de l'invention apparaîtront à la lecture de la description qui va suivre du dispositif de mesure selon l'invention, donné à titre d'exemple non limitatif en référence aux dessins ci-annexés dans lesquels :

- la figure 1 représente une vue schématique simplifiée en coupe latérale d'une pointe avant d'un aéronef selon la présente invention;
- les figures 2a et 2b représentent une vue en coupe d'un segment de paroi de radôme en composite et nid d'abeille respectivement à une couche ou deux couches ;
- la figure 3 représente une vue de l'intérieur du radôme dans lequel une fibre du dispositif de mesure selon la présente invention est mise en évidence ;
- les figures 4 à 6 représentent une vue schématique simplifiée de l'intérieur du radôme dans laquelle est mise en évidence le dispositif de mesure respectivement à réseaux de Bragg, interférométrique ou répartie selon la présente invention ;
- les figures 7 et 8 représentent des vues simplifiées en coupe latérale d'un segment de paroi de radôme dans lesquelles est mise en évidence une fibre du dispositif de mesure respectivement installée sur la paroi de radôme ou à l'intérieur de celui-ci ;
- la figure 9 représente une vue simplifiée en coupe latérale d'un segment de paroi de radôme dans lequel est mise en évidence une fibre du dispositif de mesure installée à l'intérieur de la paroi de radôme et dans lequel un système d'homogénéisation des déformées mécaniques est prévu ;
- les figures 10 et 11 représentent des vues simplifiées en coupe latérale d'un segment de paroi de radôme dans lesquelles est mise en évidence une fibre du dispositif de mesure pourvue de moyens permettant de découpler une fibre par rapport aux déformations mécaniques de la paroi de radôme de manière à mesurer les effets uniquement dus à la température ;

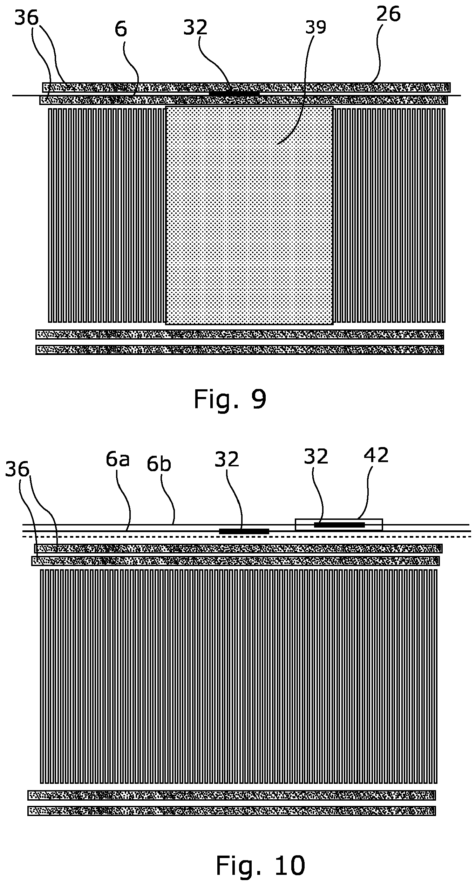

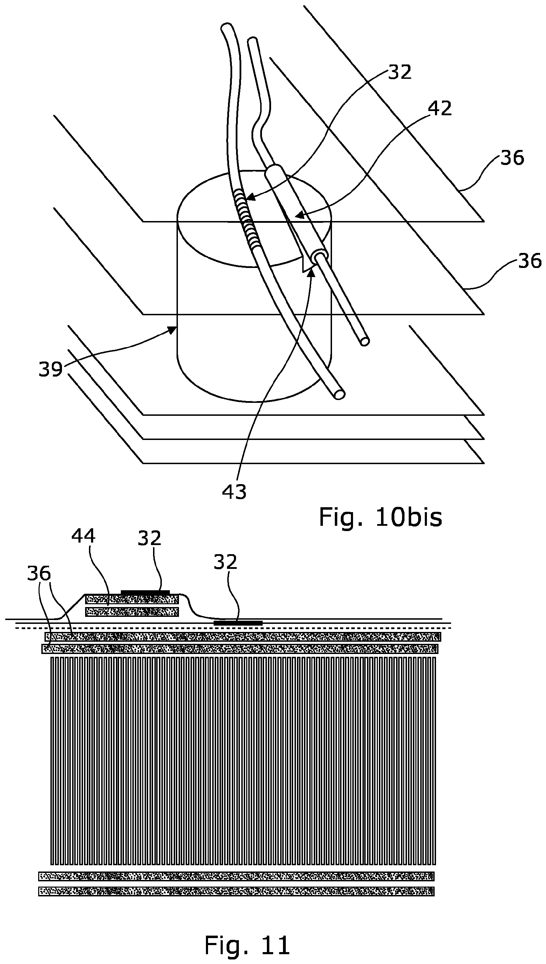

- la figure 10bis représente une vue simplifiée en perspective d'un segment de paroi de radôme dans lequel est mise en évidence une fibre du dispositif de mesure pourvue de moyens permettant de découpler une fibre par rapport aux déformations mécaniques de la paroi de radôme installée à l'intérieur de la paroi de radôme et dans lequel un système d'homogénéisation des déformées mécaniques est prévu ;

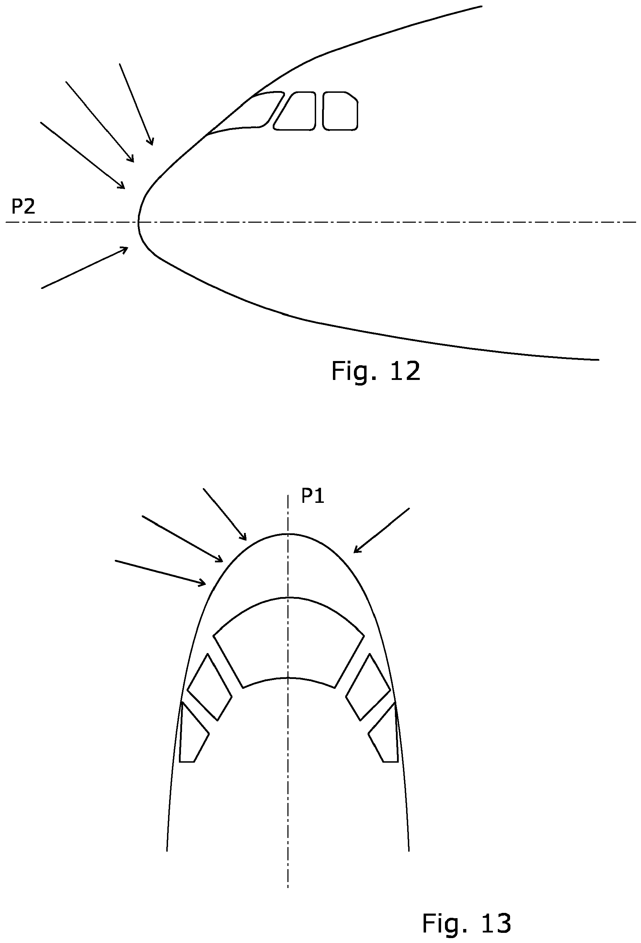

- la figure 12 représente une vue schématique en coupe simplifiée latérale d'une pointe avant d'un aéronef selon la présente invention dans laquelle des flux d'air asymétriques par rapport à un plan horizontal passant par l'extrémité du radôme sont représentés ;

- la figure 13 représente une vue schématique en coupe simplifiée de dessus d'une pointe avant d'un aéronef selon la présente invention dans laquelle des flux d'air asymétriques par rapport à un plan vertical central sont représentés.

## MANIERE DE REALISER L'INVENTION

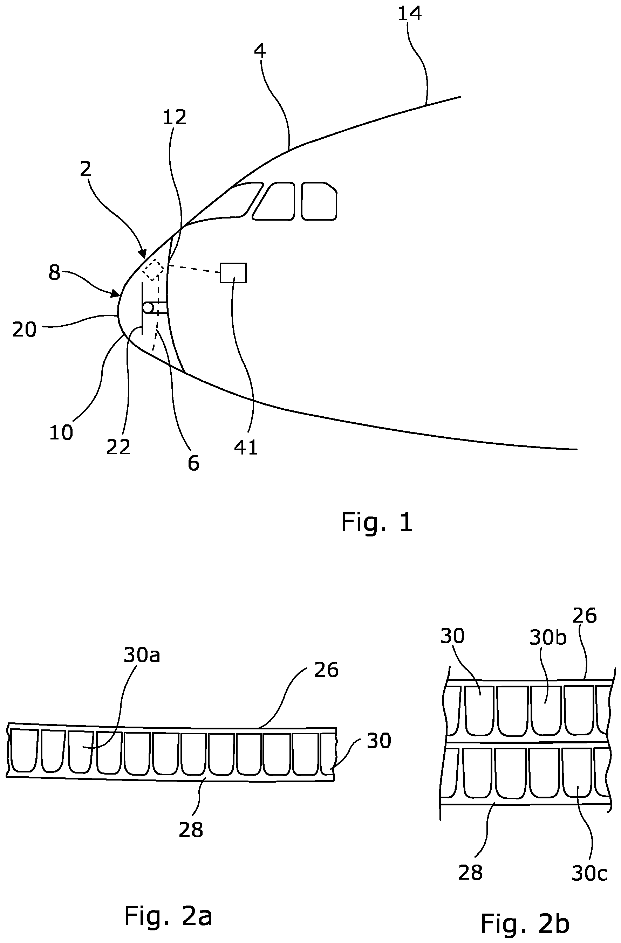

Comme le montre la figure 1, la présente invention se rapporte à un dispositif 2 de mesure de paramètres de vol d'un aéronef 4 tels que la vitesse, l'angle de dérapage et l'angle d'incidence de l'aéronef. L'aéronef 4 comprend un radôme 8. Le dispositif 2 de mesure comprend au moins une fibre 6 optique disposée au niveau du radôme 8 de l'aéronef pour en mesurer la déformée. En effet lorsque l'aéronef 4 est en vol, l'air exerce des efforts sur la surface extérieure de la paroi du radôme 8 susceptibles d'entrainer une déformation de ce dernier. Les déformées du radôme 8 sont proportionnelles aux contraintes mécaniques subies : il est donc possible en mesurant les déformées d'en déduire les efforts aérodynamiques et de calculer à partir des efforts, la vitesse de l'avion et l'angle d'incidence et de dérapage.

Comme représenté sur les figures 1, 3 à 6, le radôme 8 comprend une paroi 10 situé à l'extrémité avant de l'aéronef 4 au niveau de la pointe avant. La paroi 10 présente une double courbure de manière à former une concavité en forme de dôme. Le bord 12 périphérique libre du radôme est joint, en général de manière articulée, par tout type de moyen connu au reste du fuselage 14 de l'aéronef et par exemple par des ferrures 15. La paroi 10 présente une face 16 interne et une face 18 externe et une extrémité formant le sommet 20 du dôme à l'opposé du bord 12. Le radôme 8 de forme creuse permet de protéger des antennes 22 logées à l'intérieur de celui-ci. Le radôme comporte également un système de protection contre la foudre par exemple sous la forme de bandes 24 métalliques.

La paroi 10 de radôme 8 est en matériau perméable aux ondes électromagnétiques.

Il présente une structure sandwich comportant deux peaux 26, 28 par exemple constituées de matériau composite, disposées de part et d'autre d'une âme 30 en nid d'abeille ou en mousse. Le matériau composite comprend par exemple un renfort en fibres tel que du verre, du quartz, du « KEVLAR » (marque déposée) ou tout autre matériau diélectrique et une matrice en résine organique thermodurcissable ou thermoplastique. La structure peut être simple sandwich à savoir à une couche 30a de nid d'abeille ou mousse (comme représenté sur la figure 2a), double sandwich à savoir à deux couches 30b, 30c (comme représenté sur la figure 2b) voire à couches multiples. La surface externe de l'une des peaux 26, 28 correspond à la face 16 interne et la surface externe de l'autre peau correspond à la face 18 externe.

Les propriétés de la paroi telles que l'épaisseur de chacune des peaux, de l'âme, des propriétés diélectriques du matériau ... sont choisis de manière optimisée pour améliorer la transmission des ondes électromagnétiques.

L'utilisation de jauges de contraintes pour mesurer une déformée nécessite l'introduction de fils électriques au niveau du radôme 8 qui perturbe la transmission radioélectrique avec les antennes 22 et notamment le radar ou encore attire la foudre. La fibre optique en revanche est un matériau diélectrique. Ainsi, l'utilisation de la fibre 6 optique pour mesurer la déformée du radôme permet d'éviter tout impact sur les performances radioélectriques du radar ou encore les performances de tenue à la foudre.

Il existe différentes technologies pour mesurer une déformation d'une paroi à l'aide d'une fibre optique comme par exemple la mesure par réseau de Bragg.

La mesure par réseau de Bragg est largement connue. Le réseau de Bragg est une modification au sein d'une partie de la fibre optique créant une microstructure particulière présentant une variation périodique de l'indice de réfraction permettant de ne réfléchir qu'une longueur d'onde déterminée d'un signal lumineux émis dans la fibre en question. Le réseau joue le rôle d'un filtre sélectif. Une modification dans la forme de la fibre entraine une modification de la longueur d'onde réfléchie et de cette modification, il peut être déduit la déformée. La température également influe sur la longueur d'onde réfléchie par le réseau de Bragg. Plusieurs réseaux de Bragg peuvent être prévus de manière dispersée sur une même fibre, permettant plusieurs mesures à l'aide de la même fibre.

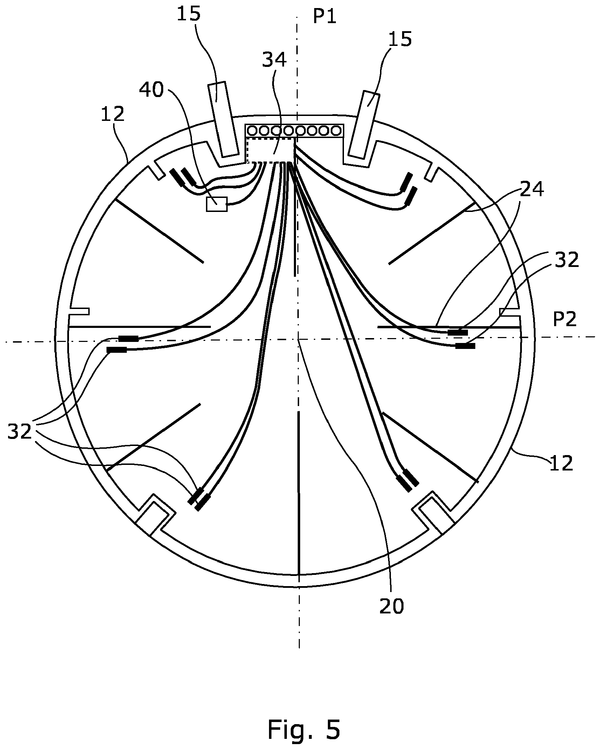

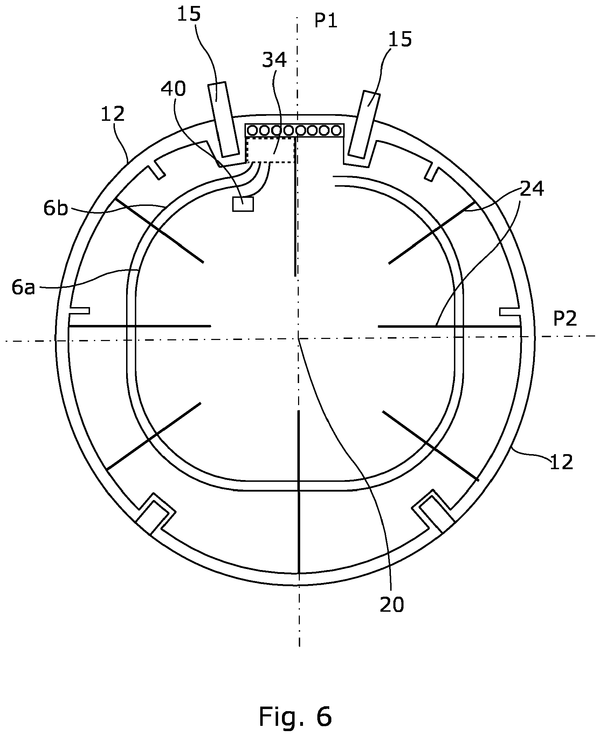

D'autres types de technologie connue pourraient également être utilisée pour mesurer la déformée à l'aide d'une fibre optique comme la mesure interférométrique en bout de fibre (représentée sur la figure 5) ou encore la mesure répartie de type Ramann ou Brillouin (représentée sur la figure 6). Le dispositif de mesure peut également utiliser une combinaison de systèmes de technologie différente à savoir par exemple des réseaux de Bragg et des systèmes interférométriques.

La description qui suit utilise la technologie de réseau de Bragg mais, comme indiqué ci-dessus, toute autre technologie en liaison avec une fibre optique pour permettre la mesure de déformée ou combinaison de technologies est applicable.

Comme le montrent les figures 1, 3 à 6, la fibre 6 optique est disposée au niveau du radôme entre le sommet 20 et le bord 12 périphérique libre, sur le pourtour du radôme. Dans la forme de réalisation illustrée sur les figures 1, 3, 4 et 6, seule une fibre 6 optique est prévue pour mesurer la déformée mais il pourrait être prévu plusieurs fibres. Par exemple, il peut être prévu d'utiliser plusieurs fibres pour pallier à une défaillance de l'une ou plusieurs d'entre elles ou dans le cas où une seule fibre ne serait pas suffisante pour permettre le nombre de réseaux de Bragg suffisants ou encore dans le cas d'une technologie comme la mesure en bout de fibre telle qu'illustrée sur la figure 5. Tout ce qui est décrit pour une fibre dans ce qui suit est applicable en cas d'une pluralité de fibres. Du fait d'utiliser une seule fibre 6, celle-ci est positionnée de manière à pouvoir détecter une déformée sur l'ensemble de la surface du radôme. Dans la forme de réalisation illustrée, la fibre ne se trouve ni trop près du bord 12 ni trop près du sommet 20. Sur l'ensemble des segments joignant le bord 12 au sommet 20, la fibre 6 est positionnée entre le tiers et les deux tiers du segment. Selon une autre forme de réalisation non illustrée, une seule fibre 6 forme une spirale sur et/ou à l'intérieur de la paroi du radôme : la fibre peut traverser la peau intérieure du radôme et ainsi être à la fois sur et à l'intérieur de la paroi.

Selon une alternative, qu'il existe une ou plusieurs fibres, chaque fibre est positionnée sur un segment du radôme joignant le bord 12 au sommet 20. Selon une autre alternative, qu'il existe une ou plusieurs fibres, chaque fibre s'enroule sur la surface intérieure du radome par exemple en suivant comme vu précédemment une forme de spirale ou encore une ligne circonférentielle. Selon un mode de réalisation possible, une ou plusieurs fibres 6 sont positionnées sur la moitié arrière de la surface intérieure du radôme, à savoir plus proche du bord 12 que du sommet 20 ou à égale distance de manière à réduire les risques d'endommagement par de la grêle ou des oiseaux ou autres ... Selon un mode de réalisation, le nombre de fibres est important et par exemple supérieur à dix.

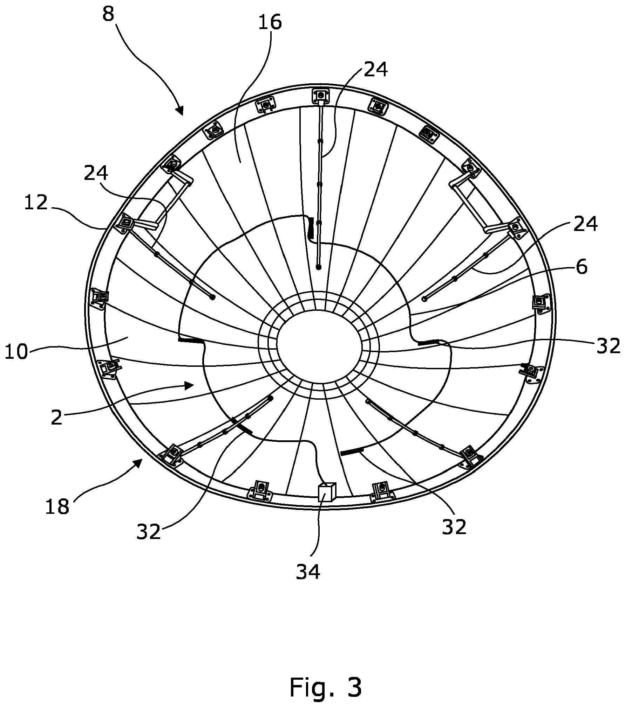

Comme représenté sur la figure 3, la fibre 6 présente plusieurs réseaux 32 de Bragg distribués de manière à les répartir sur le radôme une fois la fibre installée. Dans la forme illustrée, l'une des extrémités de la fibre 6 comporte un réseau de Bragg et l'autre extrémité est reliée à un interrogateur 34. D'autres réseaux sont répartis sur la longueur de la fibre entre les deux extrémités. L'interrogateur 34 a pour fonction de convertir le signal lumineux renvoyé par les réseaux de Bragg en information de longueur d'onde.

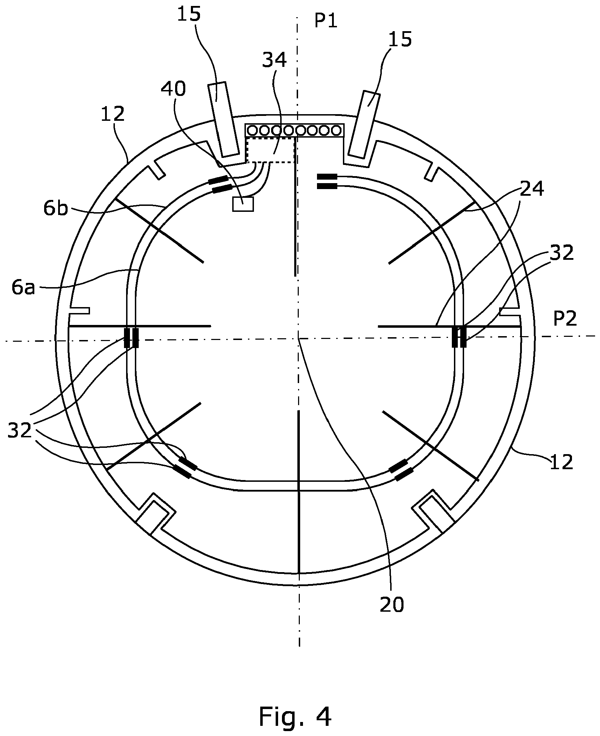

Dans la forme de réalisation représentée sur la figure 4, la température étant un paramètre pouvant influer sur la mesure, deux fibres 6 optiques sont prévues : l'une 6a dédiée à la mesure de la déformée, l'autre 6b dédiée à la mesure de la température. Comme indiqué précédemment, pour chacune de ces mesures respectivement de déformée et de température, plusieurs fibres pourraient également être prévues. Selon une autre forme de réalisation possible, une seule fibre à plusieurs réseaux de Bragg peut être utilisée. Les réseaux de Bragg sont disposés sur une partie de la longueur de celle-ci pour la mesure de la déformée et sur une autre partie de la longueur pour la mesure de la température.

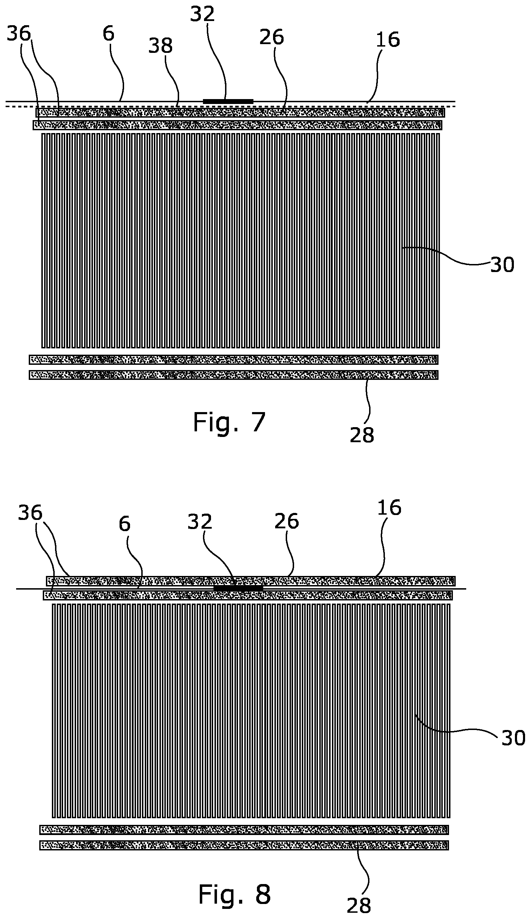

Selon la forme de réalisation illustrée sur la figure 7, la fibre 6 est apposée sur la face 16 interne du radôme. Seuls sont représentés deux plis 36 de la peau 26 en composite sur laquelle est disposée la fibre 6. La fibre 6 est fixée par tout type de moyen à la peau 26 et plus précisément au pli le plus extérieur de la peau. La fibre 6 peut par exemple être fixée à la peau 26 par collage. Le film 38 de colle est représenté par une ligne en traits pointillés sur la figure 7.

Selon une autre forme de réalisation représentée sur la figure 8, la fibre 6 est insérée entre deux plis 36 de la peau 26. La peau 26 correspond ici à la peau se trouvant du côté de la face 16 interne. Selon une autre forme de réalisation, la fibre peut être intercalée entre deux plis 36 de la peau 28, soit du côté de la face 18 externe. L'intégration de la fibre 6 à la peau 26 est réalisée au moment de la fabrication de la peau. L'avantage de cette forme de réalisation est l'absence de perturbations provenant du film 38 de colle dans la mesure de la déformée. Le fait d'intégrer la fibre à l'intérieur de la peau 26 de la paroi 10 de radôme permet la mesure directe de la déformée de celle-ci.

Dans le cas de peaux 26, 28 composite et d'une âme 30 en nid d'abeille, l'âme 30 en nid d'abeille se voit impacté différemment le long d'une cellule de nid d'abeille par les contraintes mécaniques provenant des efforts exercés par le flux extérieur d'air. Il apparait au sein d'une même cellule une différence de déformation entre le centre et le pourtour de la cellule. Afin d'homogénéiser la déformée reçue par un réseau de Bragg 32, le nid d'abeille est remplacé localement au niveau du réseau 32 en question par de la mousse. Comme représenté à titre illustratif sur la figure 9, un bloc 39 de mousse est inséré dans l'âme 30 en nid d'abeille localement en-dessous de réseaux 32 de Bragg destinés à la mesure de la déformée de la paroi et par exemple en-dessous de l'ensemble de ces réseaux 32. Le bloc 39 présente une épaisseur identique à celle de l'âme 30 en nid d'abeille de manière à joindre les peaux 26 et 28 de la paroi 10 de radôme 8 et s'étend localement autour du réseau 32 de Bragg concerné sur une surface légèrement supérieure à celui-ci de manière à déborder au-delà de toute la périphérie du réseau. Le bloc 39 forme ainsi un cylindre, un cube ou toute autre forme géométrique permettant l'homogénéisation de la déformée parvenant au réseau 32 de Bragg concerné.

Dans la forme de réalisation représentée sur la figure 4, les réseaux 32 de Bragg sont répartis de manière symétrique par rapport à un plan P1 central vertical du radôme passant par le sommet 20 (lorsqu'installé sur l'aéronef se trouvant sur une surface horizontale comme le sol). Dans l'exemple, six réseaux de Bragg 32 sont prévus sur chacune des fibres 6a et 6b, trois de chaque côté du plan P1. Par ailleurs, deux réseaux 32 de Bragg se situent au niveau d'un plan P2 central horizontal perpendiculaire au plan vertical et passant par le sommet 20, et les autres réseaux de part et d'autre de ce plan P2.

Selon une forme de réalisation, les réseaux 32 sont distribués de manière à être à la même distance les uns des autres.

De manière général, les réseaux 32 de Bragg sont répartis sur le radôme 8 de manière optimisée pour mesurer la déformée de l'ensemble de la paroi 10 de radôme.

Comme il sera vu plus loin, pour mesurer l'angle de dérapage ou l'angle d'incidence, il est nécessaire de prévoir des réseaux 32 de Bragg répartis de part et d'autre respectivement du plan P1 ou P2 ou les deux pour mesurer les deux angles.

Un capteur 40 de pression est prévu à l'intérieur du radôme pour mesurer la pression nécessaire à la détermination de la vitesse.

Un calculateur 41 embarqué à l'intérieur de l'aéronef (à l'intérieur du radôme ou à l'extérieur de celui-ci) est lié à l'interrogateur 34 et au capteur 40. Il est également lié à des capteurs de pression statique de l'aéronef de type connu non représentés ; il reçoit d'eux respectivement l'information de longueur d'onde à partir de laquelle peut être déduit l'information de déformée et l'information de pression (pression intérieure mesurée par le capteur 40 et pression statique obtenue à l'aide des capteurs de pression statique) et les convertit en information de vitesse.

Pour plus de clarté, on désigne par « déformée mécanique », la déformée d'une paroi due à des contraintes mécaniques dues aux efforts exercés par l'air sur la paroi du radôme.

Comme vu précédemment, la température influe sur le réseau de Bragg ; elle entraine notamment par exemple une déformée de celui-ci propre au changement de température. L'influence de la température provoque un décalage de la longueur d'onde. Si un ou plusieurs réseaux de Bragg sont destinés à la mesure de la déformée mécanique, le décalage de la longueur d'onde du au changement de température rend la mesure de la déformée mécanique erronée. Il est donc indispensable de compenser la mesure de déformée mécanique par la mesure de la déformée uniquement due au changement de température pour en soustraire les effets. Pour ce faire, il est nécessaire de séparer l'effet de la déformée mécanique de celui dû au changement la température : deux méthodes pour séparer les effets sont possibles et illustrées respectivement sur les figures 10 et 11.

Dans la première méthode représentée sur la figure 10, on effectue une mesure de la déformée mécanique influencée par la température, appelée ci-après déformée mécanique brute et une mesure de la température non influencée par la déformée mécanique de la paroi et on en déduit la déformée en retirant l'impact de la température mesurée sur la déformée mécanique brute. Pour ce faire, le ou les réseaux de Bragg 32 de la ou des fibres destinés à mesurer la température sont encapsulés dans une enveloppe glissante pour que ce ou ces réseaux ne soient pas impactés par la déformée de la paroi sur lequel la fibre est fixée. Le fait de prévoir une enveloppe glissante permet de découpler le réseau de Bragg de la paroi. Cette méthode consiste donc à dissocier le ou les réseaux de Bragg destinés à la mesure de la température des déformés mécaniques qui perturbent cette mesure. A titre illustratif, le réseau de Bragg se trouve dans un tube 42 constitué d'un matériau suffisamment glissant pour isoler le ou les réseaux de Bragg concernés des déformés mécaniques de la paroi. Le tube 42 peut par exemple être constitué d'un matériau comme le « TEFLON » (marque déposée) ou encore une combinaison avec un autre plastique offrant une rigidité supérieure à celle du « TEFLON » (marque déposée), le « TEFLON » (marque déposée) apportant des propriétés anti-adhérence.

Le tube permet de séparer la fibre et plus particulièrement le réseau de Bragg de la peau 26 et de ses déformées. Le réseau de Bragg mesure ainsi la température sans subir l'influence des déformées de la peau 26. La connaissance de la température permet de corriger l'information de déformée qui en dépend.

La figure 10bis présente un mode de réalisation dans lequel la fibre incorporant les réseaux 32 de Bragg est intercalée entre deux plis 36 de la peau 26. Le réseau 32 de Bragg couplé au bloc 39 décrit en référence à la figure 9 est disposé au niveau de ce dernier de manière à ce qu'il puisse réaliser sa fonction d'homogénéisation. La fibre de mesure de la température dont les réseaux sont encapsulés dans des enveloppes glissantes 42 est disposée entre le bloc 39 et la peau 26 de manière à éviter d'avoir à la fixer par collage ou autre. Sa disposition suffit à la maintenir en place sachant que cela n'interdit pas un mode de fixation complémentaire. L'enveloppe glissante est placée au plus proche du réseau 32 de Bragg précité pour réaliser une mesure la plus juste possible. Un logement 43 peut être prévu dans le bloc 39 pour y insérer la fibre de mesure 43.

La déformée correspond à la variation d'une longueur rapportée à cette même longueur. L'unité est la « microdéformée » c'est-à-dire le micron de déformée par mètre de matière.

$$\varepsilon = \text{déformée} = \delta l/l$$

Pour obtenir la mesure de la déformée mécanique non influencée par la température, appelée déformée mécanique compensée, il suffit de retrancher à la mesure de déformée mécanique brute, la valeur de la déformée uniquement due à la température, appelée déformée de dilatation, à savoir la valeur de la dilatation propre au matériau que l'on obtient à l'aide du réseau de Bragg encapsulé et découplé de la paroi :

$$\varepsilon_{i\,comp} = \varepsilon_{i\,brut} - \varepsilon_{i\,temp}$$

Avec

i correspondant au numéro du réseau de Bragg, appelé de manière conventionnel capteur de Bragg

$\varepsilon_{i\,comp}$ correspondant à la déformée mécanique compensée ;

$\varepsilon_{i\,brut}$ correspondant à la déformée mécanique brute (lue par le capteur collé ou intégré dans la peau)

$\varepsilon_{i\,temp}$ correspondant à la déformée de dilatation due à la température.

La déformée de dilatation est obtenue en multipliant la mesure de l'écart de température par rapport à une température de référence par le coefficient de dilatation du matériau composant la peau de la paroi :

$$\varepsilon_{i\,temp} = \alpha(t_{lue} - t_0)$$

avec a=coefficient de dilatation linéaire du matériau,

$t_{lue}$ = température lue par le capteur de Bragg

$t_0$ = température de référence (celle à laquelle on établit le zéro de tout système)

Dans cette première méthode, la déformée de dilatation est obtenue par calcul à partir de la température mesurée (non impactée par la déformée).

Dans la deuxième méthode représentée sur la figure 11, la déformée de dilatation est obtenue directement par mesure. Pour ce faire, on effectue une mesure de la déformée d'un échantillon 44 de peau, appelé échantillon 44 de compensation, non influencée par les contraintes mécaniques qui s'appliquent sur la paroi et une mesure de la déformée mécanique brute pour en déduire la déformée mécanique compensée. Pour ce faire, dans cette forme de réalisation, il suffit de retrancher la mesure de déformée de dilatation obtenue directement par mesure à l'aide de l'échantillon 44 de compensation à celle de la déformée mécanique brute de la paroi 10. Comme illustré sur la figure 11, un échantillon 44 de peau 26 est superposé à la paroi 8 du radôme. La fibre 6 destinée à la mesure de la déformée mécanique repose à la fois sur la paroi 8 du radôme et sur l'échantillon 44. Des réseaux de Bragg 32 sont disposés au niveau de l'échantillon 44 de compensation et au niveau de la paroi 8 de manière suffisamment proche pour être à la même température. Le ou les réseaux de Bragg 32 situés au niveau de l'échantillon 44 sont dissociés de la paroi 8 par l'échantillon 44 de compensation : ils ne subissent donc pas les déformés mécaniques brutes de la paroi 8.

A l'aide du réseau de Bragg 32 fixé sur l'échantillon 44 de compensation, on mesure la déformée de dilatation $\varepsilon_{i\,temp}$. La déformée compensée est alors obtenue en la retranchant de la déformée brute mesurée par le réseau de Bragg 32 fixé à la paroi :

$$\varepsilon_{i\,comp} = \varepsilon_{i\,brut} - \varepsilon_{i\,temp}$$

Dans ce qui précède, a été présenté un système de compensation permettant de pallier à l'influence de la température sur le fonctionnement du réseau de Bragg. Le fonctionnement du réseau de Bragg peut être perturbé par un autre facteur. Quand l'avion est en vol et qu'il change très rapidement d'altitude, la température extérieure chute ou s'élève rapidement également. Or la paroi 8 du radôme se trouvant être un assez bon isolant thermique, l'équilibre entre la température extérieure et la température intérieure au radôme n'est pas immédiat. Il s'en suit une augmentation de la différence de température entre la température extérieure et intérieure au radôme. Or une telle différence de température crée une contrainte mécanique qui n'est pas liée à celle provenant des efforts du flux d'air sur la paroi du radôme. Aussi est-il nécessaire de compenser également la mesure de la déformée mécanique de la paroi par rapport à cette différence de température. Pour ce faire, il est nécessaire de mesurer la température extérieure et la température intérieure au radôme par tout type de moyen connu et déjà présent sur un aéronef et d'en déduire la déformée en découlant.

La déformée générée pour chaque capteur de Bragg et pour un écart unitaire (c'est-à-dire pour un degré) de température au niveau d'un capteur de Bragg donné appelé $\varepsilon_{ti}$, (i étant le numéro du capteur de Bragg), peut être estimée au moyen d'un modèle de la structure du radôme (modèle à éléments finis), mis en mémoire, et utilisé de façon proportionnelle à la température pour compenser la mesure de déformée.

$$\varepsilon i_{corrigé} = \varepsilon_{i\,comp} - \varepsilon_{ti} \times (t_{ext} - t_{int})$$

Avec

i correspondant au numéro du capteur de Bragg ;

$\varepsilon_{i\,comp}$ correspondant à la déformée mécanique compensée en température obtenue précédemment à l'aide de la méthode par calcul (tube 42) ou par mesure (échantillon 44 de compensation);

$t_{ext}$ correspondant à la température extérieure au radôme ;

$t_{int}$ correspondant à la température intérieure au radôme.

Le modèle à éléments finis de la structure du radôme est établi par tout type de moyen connu.

De la même façon que dans la forme de réalisation de la figure 10, on retranche la part de déformée due aux contraintes provenant de la différence entre température intérieure et extérieure au radôme de la déformée mécanique.

Enfin, le dispositif comprend également tous les moyens nécessaires pour réaliser une compensation en pression et plus précisément sur l'écart entre pression interne du radôme et la pression statique. Cet écart entraine en effet une surestimation ou sous-estimation des déformées. On fait appel à un principe de compensation similaire à celui des températures.

La déformée générée pour chaque capteur de Bragg et pour un écart unitaire (c'est-à-dire pour 1mBar par exemple) entre pression interne $P_{int}$ et pression statique $P_{stat}$, au niveau d'un capteur de Bragg donné appelé $\varepsilon_{pi}$ (i étant le numéro du capteur de Bragg), peut être estimée au moyen d'un modèle de la structure du radôme (modèle à éléments finis), le même que celui utilisé pour la compensation en température, mis en mémoire, et utilisé de façon proportionnelle à l'écart de pression interne pour compenser la mesure de déformée.

$$\varepsilon i_{corrigé} = \varepsilon_{i\,comp} - \varepsilon_{pi} \times (P_{stat} - P_{int})$$

Avec

i correspondant au numéro du capteur de Bragg ;

$\varepsilon_{i\,comp}$ correspondant à la déformée mécanique compensée en température obtenue précédemment à l'aide de la méthode par calcul (tube 42) ou par mesure (échantillon 44 de compensation);

$P_{stat}$ correspondant à la pression statique extérieure;

$P_{int}$ correspondant à la pression intérieure du radôme.

Selon la forme de réalisation illustrée, le dispositif réalise une compensation en température et en pression et on a donc au final comme déformée :

$$\varepsilon i_{corrigé} = \varepsilon_{i\,comp} - \varepsilon_{ti} \times (t_{ext} - t_{int}) - \varepsilon_{pi} \times (P_{stat} - P_{int})$$

Tout ce qui a été décrit pour le système de mesure basée sur des réseaux de Bragg (en dehors de la technologie de Bragg proprement dite), la compensation en température influençant le fonctionnement du système de mesure, la compensation en différence de température et pression interne et externe au radôme est applicable au dispositif de mesure utilisant des systèmes interférométriques tel qu'illustré sur la figure 5 ou utilisant une mesure répartie tel qu'illustré sur la figure 6.

Sur la figure 5 est représenté le dispositif de mesure dans le cas de systèmes interférométriques. Ces systèmes interférométriques 32 étant placés en bout de fibre, chaque système nécessite une fibre 6 reliée à l'interrogateur 34. Comme le montre la figure 5, les systèmes interférométriques 32 en bout de fibre pourraient être disposés sur le radôme de la même façon que les réseaux de Bragg et en particulier de manière distribuée et répartie sur la surface du radôme pour une mesure optimisée et répartie également de part et d'autre des axes P1 et/ou P2. Dans la forme illustrée, de la même façon que pour le montage à réseaux de Bragg de la figure 4, le dispositif prévoit également un montage par paire de fibres 6a, 6b, une fibre à système interférométrique pour la mesure de la déformée et une fibre à système interférométrique pour la mesure de la température.

Sur la figure 6, le dispositif de mesure de type Ramann ou Brillouin répartit la mesure sur la longueur de la fibre. La fibre ou les fibres 6 peut ou peuvent donc être disposées de la même manière que dans le dispositif de mesure de type à réseaux de Bragg, à savoir placées sur la surface du radôme pour une mesure optimisée et de manière à répartir la mesure de part et d'autre des axes P1 et/ou P2. Dans la forme illustrée comme dans les montages représentés sur les figures 4 et 5, deux fibres 6a et 6b à mesure répartie sont prévues l'une pour la mesure de la déformée, l'autre pour la mesure de la température.

Il est possible de prévoir un dispositif de mesure combinant deux ou plusieurs de ces différentes technologies de mesure de déformée à base de fibre optique.

Le dispositif de mesure 1 fonctionne de la manière suivante en utilisant une méthode par réseau de Bragg ou système interférométrique ou mesure répartie.

L'interrogateur collecte les différentes mesures transmises par les réseaux de Bragg ou systèmes interférométriques ou systèmes répartis ainsi que celles provenant des systèmes de compensation comme ceux décrits plus hauts que ce soit la compensation en température ou en pression ou la compensation en différence de température entre l'intérieur et l'extérieur du radôme 8.

Le calculateur 41 en déduit les différentes informations de déformée de la paroi de radôme après avoir effectué la compensation. Le calculateur 41 effectue la somme des mesures de déformée compensées. L'ensemble des mesures de déformée compensées étant proportionnel à l'état de contrainte mécanique du radôme, cette somme est une information proportionnelle à l'écart de pression entre la face 16 interne et la face 18 externe du radôme 8. Or selon les lois de Bernoulli, l'écart de pression est dépendant de la densité de l'air (elle-même dépendante de la pression statique) et du carré de la vitesse de l'aéronef pour un nombre de Mach faible en-deçà duquel on considère que le fluide est incompressible. Dans le cas d'un nombre de Mach plus important au-delà duquel on considère que le fluide est compressible, l'écart de pression est une fonction un peu plus complexe de la vitesse de l'aéronef.

Ainsi comme on a obtenu la pression externe et que l'on peut également mesurer la pression statique et l'altitude par tout type de moyen connu embarqué, et donc la densité de l'air, le dispositif de mesure en déduit la vitesse de l'avion.

Pour l'obtention de l'angle d'incidence, on profite du fait d'avoir des capteurs distribués (que ce soit capteurs de Bragg, systèmes interférométriques ou mesure répartie (les capteurs étant alors considérés comme répartis sur une certaine longueur de la fibre)) de part et d'autre du plan P2. Un écoulement dissymétrique de part et d'autre du plan P2 comme représenté par les flèches sur la figure 12 conduit à des déformées dissymétriques qui peuvent être mesurées par les capteurs du fait de leur distribution répartie de part et d'autre du plan P2. A l'aide de la répartition des capteurs, il est possible de séparer les informations obtenues par les éléments du dispositif de mesure disposé d'un côté du plan P2 de ceux disposés de l'autre côté de ce plan. De cette manière, le calculateur 41 calcule l'écart entre les efforts appliqués sur la partie haute du radôme et les efforts appliqués sur la partie basse de celui-ci et en déduit l'angle d'incidence qui est une fonction de cet écart. Les paramètres de cette fonction sont déterminés par calcul en effectuant des simulations de déformation ou encore par expérimentation voire les deux ; ils dépendent notamment des dispositifs de mesure choisis.

Pour l'obtention de l'angle de dérapage, on profite du fait d'avoir des capteurs distribués (comme précédemment, le capteur pouvant être de tout type de technologie connue dont celles illustrées dans la présente demande) de part et d'autre du plan P1. Un écoulement dissymétrique de part et d'autre du plan P1 comme représenté par les flèches sur la figure 13 conduit à des déformées dissymétriques qui peuvent être mesurées par les capteurs du fait de leur distribution répartie de part et d'autre du plan P1. A l'aide de la répartition des capteurs, il est possible de séparer les informations obtenues par les éléments du dispositif de mesure disposé d'un côté du plan P1 de ceux disposés de l'autre côté de ce plan. De cette manière, le calculateur 41 calcule l'écart entre les efforts appliqués sur la partie latérale gauche du radôme et les efforts appliqués sur la partie latérale droite de celui-ci et en déduit l'angle de dérapage. De la même façon que précédemment, les coefficients de proportionnalité sont déterminés par calcul en effectuant des simulations de déformation ou encore par modélisation ; ils dépendent notamment des dispositifs de mesure choisis.

Le dispositif de mesure selon la présente invention offre ainsi un tout nouveau moyen de mesure de paramètres de vol basé sur la mesure de la déformation du radôme en vol à partir de fibres optiques munies de systèmes de mesure de déformée comme le réseau de Bragg ou le système interférométrique ou la mesure répartie.

Le dispositif de mesure n'a aucun impact sur le fonctionnement des antennes logées dans le radôme. Il permet en outre de fonctionner même en cas de givrage; en effet si du givre se dépose sur le radôme, les charges aérodynamiques restent présentes et exercent leurs effets sur le radôme à partir desquels le dispositif de mesure peut déduire les paramètres de vol.

## Revendications

**1.** Radome d'aéronef (4) comprenant un dispositif de mesure (1) d'au moins un paramètre de vol tel que la vitesse, l'angle de dérapage ou l'angle d'incidence ou tout autre paramètre en dépendant dudit aéronef (4), le dispositif de mesure comprenant des systèmes permettant de mesurer la déformée de la paroi (10) du radome (8) due aux efforts exercés par l'air sur le radôme (8) et un calculateur (41) permettant de calculer à partir des mesures de déformée obtenues par les dits systèmes le ou lesdits paramètres de vol souhaités, **caractérisé en ce que** les systèmes comprennent au moins une fibre (6a) optique pour la mesure de déformée et de température, la ou les dites fibres étant portée(s) par le radôme (8) et étant pourvue(s) de réseaux de Bragg (32), chaque fibre comportant plusieurs réseaux (32) de Bragg distribués sur la longueur de la fibre de manière à les répartir sur le radôme une fois la fibre installée, **en ce qu'**ils comprennent également des moyens permettant de compenser la mesure de la déformée mécanique par la mesure de la déformée des réseaux de Bragg due au changement de température ainsi que de la déformée de la paroi du radome (8) découlant de la différence entre la température intérieure et extérieure.

**2.** Radome selon la revendication 1, **caractérisé en ce que** la fibre (6) est intégrée à l'intérieur de la paroi (10).

**3.** Radome selon l'une des revendications 1 ou 2, **caractérisé en ce qu'**un bloc (39) de mousse est prévu au niveau d'au moins un réseau de Bragg (32) destiné à la mesure de la déformée, entre des peaux (26) et (28) de la paroi (10) de manière à les joindre.

**4.** Radome selon l'une des revendications 1 à 3, **caractérisé en ce qu'**il comprend un système (42, 44) d'isolation des contraintes mécaniques d'au moins un réseau de Bragg (32) utilisé(s) pour compenser la mesure de la déformée mécanique de celle propre au changement de température.

**5.** Radome selon la revendication 4, **caractérisé en ce que** le système d'isolation consiste en une enveloppe (42) glissante prévue autour du ou des dits réseaux de Bragg (32).

**6.** Radome selon les revendications 3 et 5, **caractérisé en ce que** l'enveloppe (42) glissante est insérée entre la peau (26) et le bloc (39) de mousse.

**7.** Radome selon les revendications 3 et 5, **caractérisé en ce que** l'enveloppe (42) glissante est fixée sur la surface extérieure de la paroi (10) au niveau du bloc (39) de mousse.

**8.** Radome selon l'une des revendications 6 ou 7, **caractérisé en ce que** l'enveloppe (42) est positionnée au plus proche du réseau de Bragg (32) associé au bloc (39) de mousse.

**9.** Radome selon la revendication 4, **caractérisé en ce que** le système d'isolation consiste en un échantillon (44) de peau superposé à la paroi (10) du radôme sur lequel le réseau de Bragg (32) est disposé pour le découpler de la déformée mécanique.

**10.** Radome selon l'une des revendications précédentes, **caractérisé en ce qu'**il comprend des moyens de mesure de la température intérieure et extérieure à partir desquelles on déduit la déformée due aux contraintes provenant de la différence de température.

**11.** Procédé de mesure d'au moins un paramètre de vol tel que la vitesse, l'angle de dérapage ou l'angle d'incidence ou tout autre paramètre en dépendant d'un aéronef (4) comprenant un radôme (8), comprenant :

- une étape de mesure de déformée de la paroi (10) provenant des efforts de l'air sur le radôme (8) à l'aide d'au moins des systèmes portés par le radôme (8) permettant de mesurer la déformée de la paroi ;
- une étape de calcul au moyen d'un calculateur (41) permettant de calculer à partir des mesures de déformée obtenues par lesdits systèmes le ou lesdits paramètres de vol souhaités ;

**caractérisé en ce que** les systèmes comprenant au moins une fibre (6a) optique portée par le radôme (8) pourvue de réseaux de Bragg (32), chaque fibre comportant plusieurs réseaux (32) de Bragg distribués sur la longueur de la fibre de manière à les répartir sur le radôme une fois la fibre installée, le procédé comprend :

- une étape de mesure de la température au niveau des réseaux de Bragg (32) et une étape de compensation de la mesure de déformée à l'aide de la température mesurée ;
- une étape de mesure de la différence de température intérieure et extérieure au radôme (8) et une étape de compensation de la mesure de la déformée à l'aide de la différence de température mesurée.

**12.** Procédé de mesure selon la revendication 11, **caractérisé en ce qu'**il comprend une étape de mesure de la déformée au niveau d'un échantillon portant un réseau de Bragg (32) et une étape de compensation de la mesure de déformée à l'aide de la mesure de déformée au niveau de l'échantillon.

**13.** Procédé de mesure selon l'une des revendications 11 ou 12, **caractérisé en ce qu'**il comprend une étape de mesure de la différence de pression entre pression interne du radôme et pression statique et une étape de compensation de la mesure de la déformée à l'aide de la différence de pression mesurée.

**Patentansprüche**

1. Radom eines Luftfahrzeugs (4), das eine Messvorrichtung (1) mindestens eines Flugparameters, wie Geschwindigkeit, Schiebewinkel oder Anstellwinkel oder jeder andere davon abhängige Parameter, des Luftfahrzeugs (4) enthält, wobei die Messvorrichtung Systeme, die es ermöglichen, die Verformung der Wand (10) des Radoms (8) aufgrund der von der Luft auf das Radom (8) ausgeübten Kräfte zu messen, und einen Rechner (41) enthält, der es ermöglicht, ausgehend von den durch die Systeme erhaltenen Verformungsmesswerten den oder die gewünschten Flugparameter zu berechnen, **dadurch gekennzeichnet, dass** die Systeme mindestens eine Lichtleitfaser (6a) zur Verformungs- und Temperaturmessung enthalten, wobei die Faser(n) vom Radom (8) getragen wird(werden) und mit Bragg-Gittern (32) versehen ist(sind), wobei jede Faser mehrere über die Länge der Faser angeordnete Bragg-Gitter (32) aufweist, um sie auf dem Radom zu verteilen, wenn die Faser eingesetzt ist, dass sie ebenfalls Einrichtungen enthalten, die es ermöglichen, den Messwert der mechanischen Verformung durch den Messwert der Verformung der Bragg-Gitter aufgrund der Temperaturänderung sowie der Verformung der Wand des Radoms (8) zu kompensieren, der sich aus der Differenz zwischen der Innen- und Außentemperatur ergibt.

2. Radom nach Anspruch 1, **dadurch gekennzeichnet, dass** die Faser (6) ins Innere der Wand (10) eingefügt ist.

3. Radom nach einem der Ansprüche 1 oder 2, **dadurch gekennzeichnet, dass** ein Schaumstoffblock (39) im Bereich mindestens eines zur Messung der Verformung bestimmten Bragg-Gitters (32) zwischen Häuten (26) und (28) der Wand (10) vorgesehen ist, um sie miteinander zu verbinden.

4. Radom nach einem der Ansprüche 1 bis 3, **dadurch gekennzeichnet, dass** es ein System (42, 44) zur Isolierung der mechanischen Beanspruchungen mindestens eines Bragg-Gitters (32) enthält, das/die verwendet wird/werden, um den Messwert der mechanischen Verformung von dem der Temperaturänderung eigenen zu kompensieren.

5. Radom nach Anspruch 4, **dadurch gekennzeichnet, dass** das Isoliersystem aus einer gleitenden Hülle (42) besteht, die um das oder die Bragg-Gitter (32) herum vorgesehen ist.

6. Radom nach den Ansprüchen 3 und 5, **dadurch gekennzeichnet, dass** die gleitende Hülle (42) zwischen die Haut (26) und den Schaumstoffblock (39) eingefügt wird.

7. Radom nach den Ansprüchen 3 und 5, **dadurch gekennzeichnet, dass** die gleitende Hülle (42) an der Außenfläche der Wand (10) im Bereich des Schaumstoffblocks (39) befestigt ist.

8. Radom nach einem der Ansprüche 6 oder 7, **dadurch gekennzeichnet, dass** die Hülle (42) so nahe wie möglich dem dem Schaumstoffblock (39) zugeordneten Bragg-Gitter (32) positioniert ist.

9. Radom nach Anspruch 4, **dadurch gekennzeichnet, dass** das das Isoliersystem aus einer die Wand (10) des Radoms überlagernden Haut-Auswahleinheit (44) besteht, auf der das Bragg-Gitter (32) angeordnet ist, um es von der mechanischen Verformung zu entkoppeln.

10. Radom nach einem der vorhergehenden Ansprüche, **dadurch gekennzeichnet, dass** es Messeinrichtungen der Innen- und Außentemperatur enthält, von denen ausgehend die Verformung aufgrund der von der Temperaturdifferenz stammenden Beanspruchungen abgeleitet wird.

11. Messverfahren mindestens eines Flugparameters, wie Geschwindigkeit, Schiebewinkel oder Anstellwinkel oder jeder andere davon abhängende Parameter, eines ein Radom (8) enthaltenden Luftfahrzeugs (4), das enthält:

    - einen Schritt der Messung der Verformung der Wand (10), die von den Krafteinwirkungen der Luft auf das Radom (8) stammt, mit Hilfe mindestens der vom Radom (8) getragenen Systeme, die es ermöglichen, die Verformung der Wand zu messen;
    - einen Schritt der Berechnung mittels eines Rechners (41), der es ermöglicht, ausgehend von den durch die Systeme erhaltenen Verformungsmesswerten den oder die gewünschten Flugparameter zu berechnen;

    **dadurch gekennzeichnet, dass** die Systeme mindestens eine vom Radom (8) getragene Lichtleitfaser (6a) enthalten, die mit Bragg-Gittern (32) versehen ist, wobei jede Faser mehrere über die Länge der Faser angeordnete Bragg-Gitter (32) aufweist, um sie auf dem Radom zu verteilen, wenn die Faser eingesetzt ist, wobei das Verfahren enthält:

- einen Schritt der Messung der Temperatur im Bereich der Bragg-Gitter (32) und einen Schritt der Kompensation des Verformungsmesswerts mit Hilfe der gemessenen Temperatur;
- einen Schritt der Messung der Temperaturdifferenz innerhalb und außerhalb des Radoms (8) und einen Schritt der Kompensation des Messwerts der Verformung mit Hilfe der gemessenen Temperaturdifferenz.

**12.** Messverfahren nach Anspruch 11, **dadurch gekennzeichnet, dass** es einen Schritt der Messung der Verformung im Bereich einer ein Bragg-Gitter (32) tragenden Auswahleinheit und einen Schritt der Kompensation des Verformungsmesswerts mit Hilfe des Verformungsmesswerts im Bereich der Auswahleinheit enthält.

**13.** Messverfahren nach einem der Ansprüche 11 oder 12, **dadurch gekennzeichnet, dass** es einen Schritt der Messung der Druckdifferenz zwischen dem Innendruck des Radoms und dem statischen Druck und einen Schritt der Kompensation des Messwerts der Verformung mit Hilfe der gemessenen Druckdifferenz enthält.

**Claims**

**1.** Radome for an aircraft (4) comprising a device (1) for measuring at least one flight parameter such as the airspeed, the sideslip angle or the angle of attack or any other parameter dependent thereon of said aircraft (4), the measuring device including systems for measuring the deformation of the wall (10) of the radome (8) due to the forces exerted by the air on the radome (8) and a computer (41) for computing from the deformation measurements obtained by said systems said required flight parameter or parameters, **characterized in that** the systems include at least one optical fibre (6a) for measuring deformation and temperature, said one or more fibres being carried by the radome (8) and being provided with Bragg gratings (32), each fibre including a plurality of Bragg gratings (32) distributed over the length of the fibre so as to distribute them over the radome when the fibre is installed, and **in that** they also include means allowing the measurement of the mechanical deformation to be adjusted to take into account the measurement of the deformation of the Bragg gratings due to the change in temperature and the deformation of the wall of the radome (8) resulting from the difference between the interior and exterior temperature.

**2.** Radome according to Claim 1, **characterized in that** the fibre (6) is integrated into the interior of the wall (10) .

**3.** Radome according to one of Claims 1 and 2, **characterized in that** a block (39) of foam is provided at the level of at least one Bragg grating (32) intended for the measurement of the deformation, between skins (26) and (28) of the wall (10) so as to join them.

**4.** Radome according to one of Claims 1 to 3, **characterized in that** it includes a system (42, 44) for isolating from mechanical stresses at least one Bragg grating (32) used to adjust the measurement of the mechanical deformation to take into account that is specific to the change in temperature.

**5.** Radome according to Claim 4, **characterized in that** the isolating system consists in a sliding envelope (42) provided around said Bragg grating or gratings (32).

**6.** Radome according to Claims 3 and 5, **characterized in that** the sliding envelope (42) is inserted between the skin (26) and the block (39) of foam.

**7.** Radome according to Claims 3 and 5, **characterized in that** the sliding envelope (42) is fixed to the exterior surface of the wall (10) at the level of the block (39) of foam.

**8.** Radome according to one of Claims 6 and 7, **characterized in that** the envelope (42) is positioned as close as possible to the Bragg grating (32) associated with the block (39) of foam.

**9.** Radome according to Claim 4, **characterized in that** the isolating system consists in a sample (44) of skin superposed on the wall (10) of the radome on which the Bragg grating (32) is disposed to decouple it from the mechanical deformation.

**10.** Radome according to one of the preceding claims, **characterized in that** it comprises means for measuring the interior and exterior temperature, from which measurements the deformation due to the stresses resulting from the temperature difference is deduced.

**11.** Method of measuring at least one flight parameter such as the airspeed, the sideslip angle or the angle of attack or any other parameter depending thereon of an aircraft (4) including a radome (8), including:

- a step of measurement of deformation of the wall (10) stemming from the forces of the air on the radome (8) using at least systems carried by the radome (8) enabling measurement of the deformation of the wall ;
- a step of computation by means of a computer (41) for computing from the deformation measurements obtained by said systems the required flight parameter or parameters;

**characterized in that** the systems comprising at least one optical fibre (6a) carried by the radome (8) provided with Bragg gratings (32), each fibre including a plurality of Bragg gratings (32) distributed over the length of the fibre so as to distribute them over the radome when the fibre is installed, the method includes :

- a step of measurement of the temperature at the level of the Bragg gratings (32) and a step of adjustment of the deformation measurement with the aid of the measured temperature;
- a step of measurement of the interior and exterior temperature difference of the radome (8) and a step of adjustment of the measurement of the deformation with the aid of the measured temperature difference.

**12.** Measuring method according to Claim 11, **characterized in that** it includes a step of measurement of the deformation at the level of a sample carrying a Bragg grating (32) and a step of adjustment of the deformation measurement with the aid of the deformation measurement at the level of the sample.

**13.** Measuring method according to one of Claims 11 and 12, **characterized in that** it includes a step of measurement of the pressure difference between internal pressure of the radome and the static pressure and a step of adjustment of the measurement of the deformation with the aid of the measured pressure difference.

14

4

12

2

8

20

10    22    6    41

**Fig. 1**

30a

26

30

28

**Fig. 2a**

30    30b    26

28    30c

**Fig. 2b**

Fig. 3

Fig. 4

Fig. 5

Fig. 6

Fig. 7

Fig. 8

36  6  32  39  26

Fig. 9

36  6a  6b  32  32  42

Fig. 10

**Fig. 10bis**

**Fig. 11**

Fig. 12

Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6038932 A
- US 2015329216 A
- US 20140229139 A
- CN 103913592